# EUROPÄISCHE PATENTSCHRIFT

(11) **EP 2 349 838 B1**
(45) Veröffentlichungstag und Bekanntmachung des Hinweises auf die Patenterteilung: **06.11.2013**
(21) Anmeldenummer: 09778399.7
(22) Anmeldetag: 08.09.2009
(51) Int. Cl.: B64D 13/02, B64C 1/18

(54) **VERFAHREN UND SYSTEM ZUR NOTBELÜFTUNG EINER FLUGZEUGKABINE IM FALL EINES LECKS IM BEREICH EINES LUFTMISCHERS**
METHOD AND SYSTEM FOR EMERGENCY VENTILATION OF AN AIRCRAFT CABIN IN CASE OF A LEAK IN THE AREA OF AN AIR MIXER
PROCEDE ET SYSTEME DE VENTILATION D'URGENCE DANS UNE CABINE D'AVION EN CAS DE FUITE DANS LA REGION D'UN MELANGEUR D'AIR

(30) Priorität: 21.11.2008 DE 102008058451; 21.11.2008 US 116676 P
(43) Veröffentlichungstag der Anmeldung: 03.08.2011
(73) Patentinhaber: Airbus Operations GmbH, 21129 Hamburg (DE)
(72) Erfinder: KLIMPEL, Frank, 23863 Naherfurth in Kayhude (DE); SCHMIDT, Rüdiger, 21717 Fredenbeck (DE)
(74) Vertreter: Schicker, Silvia
(86) Internationale Anmeldenummer: PCT/EP2009/006510
(87) Internationale Veröffentlichungsnummer: WO 2010/057548

(56) Entgegenhaltungen:
- EP-A1- 0 343 020
- WO-A1-2007/054206
- DE-A1-102007 010 268
- US-A- 3 101 918

## Beschreibung

Die Erfindung betrifft ein Verfahren und ein System zur Notbelüftung einer Flugzeugkabine im Fall eines Lecks im Bereich eines Luftmischers der Flugzeugklimaanlage.

In Verkehrsflugzeugen werden derzeit zur Klimatisierung der Flugzeugkabine üblicherweise sogenannte luftgestützte Klimaanlagen eingesetzt. Die Flugzeugklimaanlage dient der Kühlung der Flugzeugkabine, die sonst durch Wärmelasten, wie z.B. Sonneneinstrahlung, Körperwärme der Passagiere und Abwärme von an Bord des Flugzeugs vorhandenen Geräten zu stark erwärmt würde. Darüber hinaus führt die Flugzeugklimaanlage ausreichend Frischluft in die Flugzeugkabine zu, um sicherzustellen, dass in der Flugzeugkabine ein vorgeschriebener Mindestanteil an Sauerstoff vorhanden ist. Schließlich dient die Flugzeugklimaanlage dazu, den Druck in der Flugzeugkabine im Flugbetrieb des Flugzeugs ab einer bestimmten Flughöhe auf einem gegenüber dem Umgebungsdruck erhöhten Niveau zu halten.

Bei einer beispielsweise aus der DE 10 2006 016 541 A1 bekannten Flugzeugklimaanlage wird heiße Prozessluft, die im Flugbetrieb des Flugzeugs von den Flugzeugtriebwerken abgezapft wird, zwei unabhängig voneinander betreibbaren Klimaaggregaten zugeführt. In den Klimaaggregaten wird die mit einer hohen Temperatur und einem hohen Druck zugeführte Prozessluft derart aufbereitet, dass sie die Klimaaggregate als entspannte und gekühlte Prozessluft verlässt. Die entspannte und gekühlte Prozessluft wird als Frischluft einem Mischer zugeführt, in dem sie mit aus der Flugzeugkabine abgeführter Rezirkulationsluft vermischt wird. Die Rezirkulationsluft wird üblicherweise von Rezirkulationsventilatoren aus der Flugzeugkabine in den Mischer gefördert. Die in dem Mischer erzeugte Luftmischung aus Frischluft und Rezirkulationsluft wird schließlich zur Belüftung der Flugzeugkabine in die Flugzeugkabine geleitet.

Dokument DE102007010268, das als nachkriegender Stand der Technik betrachtet wird, zeigt ebenfalls eine Flugzeugklimaanlage.

Wenn während des Fluges ein Defekt in der Flugzeugklimaanlage auftritt, der bewirkt, dass die Flugzeugkabine nicht mehr mit ausreichend Frischluft versorgt werden kann, so sinkt das Flugzeug auf eine sichere Flughöhe, in der es nicht länger erforderlich ist, den Druck in der Flugzeugkabine auf einem gegenüber dem Umgebungsdruck erhöhten Niveau zu halten, und fliegt unbedruckt zum Zielflughafen bzw. zu einem nähergelegenen Flugfeld. Um für diesen Zeitraum die notwendige Atemluft für die Passagiere bereitzustellen, ist es bekannt, Flugzeuge mit einem bzw. mehreren Notstaulufteinlässen zu versehen. Durch eine entsprechende Steuerung von die Notstaulufteinlässe im Normalbetrieb des Flugzeugs verschließenden Notstaulufteinlassklappen, kann dafür gesorgt werden, dass über die Notstaulufteinlässe Stauluft aus der Flugzeugumgebung zugeführt und als Frischluft in den Mischer der Flugzeugklimaanlage eingespeist wird.

Als besonders problematisch ist ein Fehlerfall einzustufen, bei dem im Bereich des Mischers der Flugzeugklimaanlage, beispielsweise durch abgetrennte Rotorteile oder dergleichen, ein Leck erzeugt wird. Bei einer Leckage im Bereich des Mischers entweicht Luft aus dem Mischer in einen zu dem Mischer benachbarten Flugzeugbereich. Infolge dessen kommt es zu einem Druckabfall im Mischer, so dass nicht länger ausreichend Luft aus dem Mischer in die Flugzeugkabine gedrückt werden kann. Durch den Druckabfall im Mischer steigt der Luftmassenstrom aus den Klimaaggregaten aufgrund des wegfallenden Mischergegendrucks kurzeitig rapide an. Daraufhin verringert die Steuerung der Klimaaggregate den Luftmassenstrom aus den Klimaaggregaten, wodurch der Mischerdruck weiter abfällt. Ferner bewirkt der Druckabfall im Mischer, dass die Rezirkulationsventilatoren Luft aus dem Mischer statt aus der Flugzeugkabine saugen. Folglich entsteht ein Kurzschluss im Rezirkulationsluftsystem, der dazu führt, dass auch der Rezirkulationsluftstrom zusammenbricht. Im Fehlerfall einer Leckage im Bereich des Mischers wird somit weder ausreichend Frischluft aus den Klimaaggregaten noch ausreichend Rezirkulationsluft in die Flugzeugkabine geleitet.

Die Frischluftzufuhr über die Notstaulufteinlässe kann bei einer Leckage im Bereich des Mischers ebenfalls keine ausreichende Frischluftversorgung der Flugzeugkabine gewährleisten, da die über die Notstaulufteinlässe zugeführte Frischluft über den Mischer in der Kabine verteilt wird. Folglich entweicht auch die über die Notstaulufteinlässe zugeführte Frischluft ungenutzt in die Umgebung des Mischers im Unterflurbereich des Flugszeugs. Ein Leck im Bereich des Mischers der Flugzeugklimaanlage kann somit dazu führen, dass insbesondere in Flugzeugen, bei denen kein Cockpit- oder Kabinenfenster geöffnet werden kann, der CO₂-Anteil in der Kabinenluft auf ein gesundheitsschädliches Niveau steigt.

Der Erfindung liegt die Aufgabe zugrunde, ein Verfahren und ein System zur Notbelüftung einer Flugzeugkabine bereitzustellen, die auch im Fall eines Lecks im Bereich eines Luftmischers der Flugzeugklimaanlage eine ausreichende Versorgung der Flugzeugkabine mit Frischluft gewährleisten.

Zur Lösung dieser Aufgabe wird bei einem erfindungsgemäßen Verfahren zur Notbelüftung einer Flugzeugkabine in einem ersten Schritt das Vorhandensein eines Lecks im Bereich eines Luftmischers einer Flugzeugklimaanlage erfasst. Das im Bereich des Luftmischers der Flugzeugklimaanlage vorhandene Leck kann beispielsweise ein durch ein abgetrenntes Rotorteil oder dergleichen verursachtes Leck sein. Die Leckerfassung bzw. Leckerkennung kann beispielsweise von einer elektronischen Steuereinheit anhand von Signalen durchgeführt werden, die der elektronischen Steuereinheit von ohnehin in der Flugzeugklimaanlage vorgesehenen Sensoren übermittelt werden. Die Sensoren können beispielsweise in verschiedenen Bereichen der Flugzeugklimaanlage angeordnete Drucksensoren sein, so dass die elektronische Steuereinheit ein im Bereich des Luftmischers der Flugzeugklimaanlage vorhandenes Leck anhand der für einen derartigen Fehlerfall charakteristischen Druckentwicklungen in den verschiedenen Bereichen der Flugzeugklimaanlage erkennen kann. Zusätzlich oder alternativ dazu können die Sensoren, deren Signale zur Erkennung eines Lecks im Bereich des Luftmischers der Flugzeugklimaanlage genutzt werden können, Sensoren sein, die einen Frischluftmassenstrom von einem Klimaaggregat der Flugzeugklimaanlage zu dem Luftmischer, einen Rezirkulationsluftmassenstrom und/oder einen von dem Luftmischer in die Flugzeugkabine geleiteten Mischluftmassenstrom messen.

Wie oben erläutert, entweicht beim Vorliegen eines Lecks im Bereich des Luftmischers der Flugzeugklimaanlage Luft aus dem Mischer in einen zu dem Mischer benachbarten Flugzeugbereich. Wenn sich der Luftmischer der Flugzeugklimaanlage, wie es in modernen Verkehrsflugzeugen allgemein üblich ist, im Unterflurbereich des Flugzeugs befindet, entweicht die Luft folglich aus dem Mischer in einen den Mischer umgebenden Abschnitt des Flugzeugunterflurbereichs und wird nicht länger der Flugzeugkabine zugeführt. Bei dem erfindungsgemäßen Notbelüftungsverfahren wird daher eine Notluftklappe, die in einer geschlossenen Stellung einen Luftaustausch zwischen dem zu dem Luftmischer benachbarten Flugzeugbereich und der Flugzeugkabine verhindert, in eine geöffnete Stellung gesteuert. Die Notluftklappe kann mit Hilfe der elektronischen Steuereinheit gesteuert werden, die auch die Erkennung der Leckage im Bereich des Luftmischers übernimmt. Dies kann beispielsweise die zentrale Steuereinheit der Flugzeugklimaanlage sein. Alternativ dazu können für die Leckerkennung und die Steuerung der Notluftklappe jedoch auch separate elektronische Steuereinheiten vorgesehen sein.

Ferner wird Luft aus dem zu dem Luftmischer benachbarten Flugzeugbereich durch die geöffnete Notluftklappe in die Flugzeugkabine gefördert. Mit anderen Worten, bei dem erfindungsgemäßen Notbelüftungsverfahren wird dafür gesorgt, dass die aus dem Luftmischer der Flugzeugklimaanlage entweichende Luft nicht ungenutzt bleibt, sondern über die Notluftklappe ihrem ursprünglichen Bestimmungsort, der Flugzeugkabine, zugeführt wird. Durch das erfindungsgemäße Notbelüftungsverfahren kann somit selbst in Flugzeugen, bei denen kein Cockpit- oder Kabinenfenster geöffnet werden kann, auch beim Vorliegen eines Lecks im Bereich des Luftmischers der Flugzeugklimaanlage eine ausreichende Versorgung der Flugzeugkabine mit Frischluft gewährleistet werden. Ferner wird bei dem erfindungsgemäßen Verfahren zur Notbelüftung einer Flugzeugkabine die gewünschte Förderung von Luft aus dem zu dem Luftmischer benachbarten Flugzeugbereich in die Flugzeugkabine selbst durch eine Beschädigung der Flugzeugaußenhaut in der Umgebung des Luftmischers nicht beeinträchtigt, da im Flugbetrieb des Flugzeugs der Außendruck auf die beschädigte Flugzeugaußenhaut so hoch ist, dass keine Luft aus dem zu dem Luftmischer benachbarten Flugzeugbereich in die Flugzeugumgebung austritt.

Grundsätzlich kann die Luft, die aufgrund eines Lecks im Bereich des Luftmischers aus dem Luftmischer in den zu dem Luftmischer benachbarten Flugzeugbereich entweicht, durch jede beliebige geeignete Fördereinrichtung aus dem zu dem Luftmischer benachbarten Flugzeugbereich in die Flugzeugkabine gefördert werden. Beispielsweise kann in dem zu dem Luftmischer benachbarten Flugzeugbereich ein Ventilator oder ein Gebläse vorgesehen sein, der/das im Bedarfsfall dazu dienen kann, Luft aus dem zu dem Luftmischer benachbarten Flugzeugbereich durch die geöffnete Notluftklappe in die Flugzeugkabine zu fördern. Die Fördereinrichtung kann mit Hilfe der Steuereinrichtung gesteuert werden, die auch die Leckerkennung im Bereich des Luftmischers und/oder die Steuerung der Notluftklappe übernimmt. Alternativ dazu kann jedoch auch eine separate Steuereinrichtung zur Steuerung der Fördereinrichtung vorgesehen sein.

Bei einer bevorzugten Ausführungsform des erfindungsgemäßen Notbelüftungsverfahrens wird jedoch ein Luftauslassventil eines Flugzeugkabinendruckregelsystems derart in eine geöffnete Stellung gesteuert, dass in einem zu dem Luftauslassventil benachbarten Bereich des Flugzeugs ein Druck erzeugt wird, der geringer ist als der Druck in dem zu dem Luftmischer benachbarten Flugzeugbereich. Dies ist beispielsweise in einem Betriebszustand des Luftauslassventils möglich, in dem das in Form einer Klappe ausgebildete Luftauslassventil 50 % geöffnet ist. Beispielsweise kann bei einer Reisegeschwindigkeit des Flugzeugs von 0,5 Mach in einem Flugzeugbereich, der zu einem mit einer Klappenöffnung von 50 % geöffneten Luftauslassventil benachbart ist, ein Unterdruck von -0,1 cp relativ zum Flugzeugumgebungsdruck erzeugt werden. Falls das Flugzeugkabinendruckregelsystem des Flugzeugs mehrere Luftauslassventile umfasst, wird bei dem erfindungsgemäßen Notbelüftungsverfahren vorzugsweise ein Luftauslassventil geöffnet, das in einem hinteren Rumpfbereich des Flugzeugs angeordnet ist.

Da der zu dem Luftauslassventil des Flugzeugkabinendruckregelsystems benachbarte Flugzeugbereich üblicherweise von dem den Luftmischer umgebenden Flugzeugbereich getrennt ist, ermöglicht die gezielte Einstellung eines Unterdrucks in dem zu dem Luftauslassventil benachbarten Flugzeugbereich durch eine entsprechende Steuerung des ÖfFnungszustands des Luftauslassventils die Erzeugung einer unterdruckgetriebenen Luftströmung aus dem zu dem Luftmischer benachbarten Flugzeugbereich in die Flugzeugkabine. Nach dem Durchströmen der Flugzeugkabine wird die Luft schließlich aus der Flugzeugkabine in den zu dem Luftauslassventil benachbarten Flugzeugbereich gesaugt und durch das geöffnete Luftauslassventil in die Flugzeugumgebung abgeführt. Die Luftströmung aus der Flugzeugkabine in den zu dem Luftauslassventil benachbarten Flugzeugbereich kann beispielsweise durch Luftauslassöffnungen erfolgen, die in einem die Flugzeugkabine vom Unterflurbereich des Flugzeugs trennenden Boden und/oder Seitenwänden der Flugzeugkabine ausgebildet sind. Das Luftauslassventil des Flugzeugkabinendruckregelsystems kann mit Hilfe der Steuereinheit gesteuert werden, die auch zur Erkennung des Lecks im Bereich des Luftmischers der Flugzeugklimaanlage und/oder zur Steuerung der Notluftklappe genutzt wird. Alternativ dazu kann jedoch auch eine separate elektronische Steuereinheit oder eine elektronische Steuereinheit des Flugzeugkabinendruckregelsystems in das erfindungsgemäße Verfahren zur Notbelüftung einer Flugzeugkabine einbezogen und zur Steuerung des Luftauslassventils genutzt werden.

Die unterdruckgetriebene Förderung von Luft aus dem den Luftmischer umgebenden Flugzeugbereich in die Flugzeugkabine durch eine entsprechende Steuerung des Luftauslassventils des Flugzeugkabinendruckregelsystems ermöglicht den Verzicht auf eine separate Fördereinrichtung. Dadurch können Gewichts- und Einbauraumersparnisse realisiert werden. Ferner wird die Zuverlässigkeit des Notbelüftungssystems erhöht, da ausgeschlossen werden kann, dass in einem Fehlerfall auch die separate Fördereinrichtung beschädigt wird und folglich nicht mehr betriebsbereit ist.

Wenn ein Klimaaggregat der Flugzeugklimaanlage von dem beispielsweise durch ein abgetrenntes Rotorteil verursachten Defekt nicht betroffen und daher noch betriebsbereit ist, wird das Klimaaggregat vorzugsweise derart gesteuert, dass von dem Klimaaggregat ein maximaler Luftmassenstrom erzeugt und dem Luftmischer zugeführt wird. Falls beide Klimaaggregate der Flugzeugklimaanlage noch betriebsbereit sind, werden vorzugsweise beide Klimaaggregate so gesteuert, dass sie einen maximalen Luftmassenstrom erzeugen und dem Luftmischer zuführen. Dadurch wird sichergestellt, dass im Luftmischer und insbesondere in dem zu dem Luftmischer benachbarten Flugzeugbereich ausreichend Luft zur Zufuhr in die Flugzeugkabine vorhanden ist.

Ferner kann eine Notstaulufteinlassklappe in eine geöffnete Stellung gesteuert werden, so dass dem Luftmischer durch einen Notstaulufteinlass Flugzeugumgebungsluft zuführbar ist. Falls mehrere Notstaulufteinlässe vorhanden sind, werden vorzugsweise alle Notstaulufteinlassklappen in ihre geöffnete Stellung gesteuert. Die Zufuhr von Flugzeugumgebungsluft in den Luftmischer über einen Notstaulufteinlass ist besonders wichtig, wenn beide Klimaaggregate der Flugzeugklimaanlage ausgefallen sind. Eine Umgebungsluftzufuhr über einen Notstaulufteinlass ist jedoch auch im betriebsbereiten Zustand der Klimaaggregate der Flugzeugklimaanlage denkbar, beispielsweise um für eine zusätzliche Luftzufuhr in den Luftmischer und insbesondere in den zu dem Luftmischer benachbarten Flugzeugbereich zu sorgen. Die Steuerung der Klimaaggregate der Flugzeugklimaanlage und der Notstaulufteinlassklappe des Notstaulufteinlasses kann mit Hilfe der Steuereinheit erfolgen, die auch zur Erkennung des Lecks im Bereich des Luftmischers und/oder zur Steuerung der Notluftklappe genutzt wird. Alternativ dazu kann der Betrieb der Klimaaggregate und der Notstaulufteinlassklappe jedoch auch durch (eine) separate Steuereinheit(en) gesteuert werden.

Bei einer bevorzugten Ausführungsform des erfindungsgemäßen Verfahrens zur Notbelüftung einer Flugzeugkabine werden ferner die Rezirkulationsventilatoren der Flugzeugklimaanlage derart gesteuert, dass ihr Betrieb unterbrochen wird. Dadurch kann der Druck im Bereich des Luftmischers, der der Zufuhr von Luft aus den Klimaaggregaten und dem Notstaulufteinlass in den Luftmischer entgegenwirkt, verringert werden. Ferner wird verhindert, dass die Rezirkulationsventilatoren beim Vorliegen entsprechender Druckverhältnisse Luft aus dem Luftmischer saugen. Die Rezirkulationsventilatoren können mit Hilfe der elektronischen Steuereinheit gesteuert werden, die auch die Leckerkennung im Bereich des Luftmischers und/oder die Steuerung der Notluftklappe übernimmt. Alternativ dazu kann der Betrieb der Rezirkulationsventilatoren jedoch auch von einer separaten Steuereinheit gesteuert werden.

Vorzugsweise ist die Notluftklappe in einem Kabinenverkleidungspaneel angeordnet oder durch ein Kabinenverkleidungspaneel gebildet. Das Kabinenverkleidungspaneel kann beispielsweise ein Dado-Paneels der Flugzeugkabinenverkleidung sein. Selbstverständlich kann auch eine Mehrzahl von Notluftklappen vorgesehen sein. Beispielsweise können ein Teil der oder alle Dado-Paneele der Flugzeugkabinenverkleidung als Nottuftklappen ausgebildet sein. Die Dado-Paneele können beispielsweise beweglich angeordnet sein, so dass sie in einer geschlossenen Stellung einen Luftaustausch zwischen dem zu dem Luftmischer benachbarten Flugzeugbereich und der Flugzeugkabine verhindern und in einer geöffneten Stellung die Zufuhr von Luft aus dem zu dem Luftmischer benachbarten Flugzeugbereich in die Flugzeugkabine ermöglichen.

Ein erfindungsgemäßes System zur Notbelüftung einer Flugzeugkabine umfasst eine elektronische Steuereinheit, die dazu eingerichtet ist, ein Leck im Bereich eines Luftmischers einer Flugzeugklimaanlage zu erkennen und eine Notluftklappe, die in einer geschlossenen Stellung einen Luftaustausch zwischen einem zu dem Luftmischer benachbarten Flugzeugbereich und der Flugzeugkabine verhindert, in eine geöffneten Stellung zu steuern. Ferner umfasst das erfindungsgemäße Notbelüftungssystem eine Einrichtung zur Förderung von Luft aus dem zu dem Luftmischer benachbarten Flugzeugbereich durch die geöffnete Notluftklappe in die Flugzeugkabine. Durch das erfindungsgemäße Notbelüftungssystem kann selbst in einem Fehlerfall, bei dem der Luftmischer der Flugzeugklimaanlage beschädigt ist, so dass Luft aus dem Luftmischer in den zu dem Luftmischer benachbarten Flugzeugbereich austritt, eine ordnungsgemäße Belüftung der Flugzeugkabine gewährleistet werden.

Vorzugsweise umfasst die Einrichtung zur Förderung von Luft aus dem zu dem Luftmischer benachbarten Flugzeugbereich in die Flugzeugkabine ein Luftauslassventil eines Flugzeugkabinendruckregelsystems, das dazu eingerichtet ist, derart in eine geöffnete Stellung gesteuert zu werden, dass in einem zu dem Luftauslassventil benachbarten Bereich des Flugzeugs ein Druck erzeugt wird, der geringer ist als der Druck in dem zu dem Luftmischer benachbarten Flugzeugbereich. Da der zu dem Luftauslassventil benachbarte Bereich des Flugzeugs von dem zu dem Luftmischer benachbarten Flugzeugbereich getrennt ist, kann durch eine entsprechende Öffnung des Luftauslassventils eine unterdruckgetriebene Luftströmung aus dem zu dem Luftmischer benachbarten Flugzeugbereich über die Flugzeugkabine in den zu dem Luftauslassventil benachbarten Flugzeugbereich erzeugt werden. Auf die Bereitstellung einer separaten Fördereinrichtung zur Förderung von Luft aus dem zu dem Luftmischer benachbarten Flugzeugbereich in die Flugzeugkabine kann somit verzichtet werden.

Das erfindungsgemäße Notbelüftungssystem kann ferner eine elektronische Steuereinheit umfassen, die dazu eingerichtet ist, ein Klimaaggregat der Flugzeugkabine derart zu steuern, dass von dem Klimaaggregat ein maximaler Luftmassenstrom erzeugt und dem Luftmischer zugeführt wird. Falls beide Klimaaggregate der Flugzeugklimaanlage noch betriebsbereit sind, ist die elektronische Steuereinheit vorzugsweise dazu eingerichtet, beide Klimaaggregate derart zu steuern, dass von den Klimaaggregaten ein maximaler Luftmassenstrom erzeugt und dem Luftmischer zugeführt wird.

Ferner kann das erfindungsgemäße Notbelüftungssystem eine elektronische Steuereinheit umfassen, die dazu eingerichtet ist, eine Notstaulufteinlassklappe in eine geöffnete Stellung zu steuern, so dass dem Luftmischer durch einen Notstaulufteinlass Flugzeugumgebungsluft zuführbar ist.

Ferner kann eine elektronische Steuereinheit vorgesehen sein, die dazu eingerichtet ist, Rezirkulationsventilatoren der Flugzeugklimaanlage derart zu steuern, dass ihr Betrieb unterbrochen wird.

Die elektronische Steuereinheit des erfindungsgemäßen Notbelüftungssystems, die dazu dient, ein im Bereich des Luftmischers vorhandenes Leck zu erkennen und/oder die Notluftklappe zu steuern, kann auch zur Steuerung des Klimaaggregats/der Klimaaggregate der Flugzeugklimaanlage, der Notstaulufteinlassklappe und/oder der Rezirkulationsventilatoren herangezogen werden. Beispielsweise kann diese elektronische Steuereinheit die zentrale Steuereinheit der Flugzeugklimaanlage sein. Falls gewünscht oder erforderlich, können jedoch auch separate elektronische Steuereinheiten zur Leckerkennung, zur Steuerung der Notluftklappe, zur Steuerung des Klimaaggregats/der Klimaaggregate, zur Steuerung der Notstaulufteinlassklappe und/oder zur Steuerung der Rezirkulationsventilatoren eingesetzt werden. Ferner kann die Steuerung des Luftauslassventils des Flugzeugkabinendruckregelsystems von der elektronischen Steuereinheit übernommen werden, die auch dazu dient, ein im Bereich des Luftmischers vorhandenes Leck zu erkennen und/oder die Notluftklappe zu steuern. Alternativ dazu kann jedoch auch eine separate elektronische Steuereinheit oder eine elektronische Steuereinheit des Flugzeugkabinendruckregelsystems Teil des erfindungsgemäßen Notbelüftungssystems sein.

Bei einer bevorzugten Ausführungsform des erfindungsgemäßen Systems zur Notbelüftung einer Flugzeugkabine ist die Notluftklappe in einem Kabinenverkleidungspaneel angeordnet oder durch ein Kabinenverkleidungspaneel gebildet. Das Kabinenverkleidungspaneel kann beispielsweise ein Dado-Paneel der Flugzeugkabinenverkleidung sein.

Eine bevorzugte Ausführungsform der Erfindung wird nun anhand der beigefügten schematischen Zeichnungen näher erläutert, von denen
- Figur 1: eine Übersichtsdarstellung eines Systems zur Notbelüftung einer Flugzeugkabine zeigt, und
- Figuren 2a und 2b: in einem Notbelüftungssystem gemäß Figur 1 als Notluftklappen eingesetzte Dado-Paneele einer Flugzeugkabinenverkleidung zeigen.

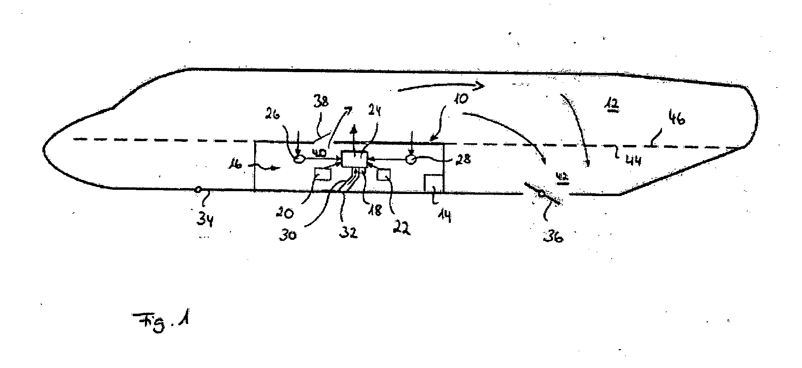

Figur 1 zeigt ein System 10 zur Notbelüftung einer Flugzeugkabine 12. Unter dem Begriff Flugzeugkabine 12 sind hier alle im Normalbetrieb eines Flugzeugs zu belüftende Bereiche des Flugzeugs, wie beispielsweise ein Cockpit, eine Passagierkabine, Crewbereiche und zu belüftende Frachträume zu verstehen. Das Notbelüftungssystem 10 umfasst eine elektronische Steuereinheit 14, die Signale von einer Mehrzahl von im Bereich einer Flugzeugklimaanlage 16 angeordneten Sensoren 18 empfängt. Die Sensoren 18 dienen dazu, den Druck und die Luftmassenströme in verschiedenen Bereichen der Flugzeugklimaanlage 16 zu messen.

Die Flugzeugklimaanlage 16 umfasst zwei unabhängig voneinander betreibbare Klimaaggregate 20, 22. In den Klimaaggregaten 20, 22 wird den Klimaaggregaten 20, 22 von den Triebwerken des Flugzeugs zugeführte heiße Zapfluft derart aufbereitet, dass sie die Klimaaggregate 20, 22 als entspannte und gekühlte Prozessluft verlässt. Die entspannte und gekühlte Prozessluft wird als Frischluft einem zentralen Mischer 24 zugeführt. In dem Mischer 24 wird die Frischluft aus den Klimaaggregaten 20, 22 mit Rezirkulationsluft vermischt, die Rezirkulationsventilatoren 26, 28 aus der Flugzeugkabine 12 in den Mischer 24 fördern. Die in dem Mischer 24 erzeugte Luftmischung aus Frischluft und Rezirkulationsluft wird schließlich über ein in Figur 1 nicht veranschaulichtes Luftverteilungssystem in die Flugzeugkabine 12 geleitet.

Der Mischer 24 der Flugzeugklimaanlage 16 steht ferner mit einem Notstaulufteinlass 30 in Verbindung. Im Normalbetrieb des Flugzeugs ist der Notstaulufteinlass 30 durch eine im Bereich der Flugzeugaußenhaut angeordnete Notstaulufteinlassklappe 32 verschlossen. Bei geöffneter Notstaulufteinlassklappe 32 kann Stauluft aus der Flugzeugumgebung durch den Notstaulufteinlass 30 in den Mischer 24 der Flugzeugklimaanlage 16 geleitet werden. Der Betrieb der Notstaulufteinlassklappe 32 wird von der elektronischen Steuereinheit 14 gesteuert.

Ferner sind in Figur 1 ein erstes und ein zweites Luftauslassventil 34, 36 eines Flugzeugkabinendruckregelsystems veranschaulicht. Im Normalbetrieb des Flugzeugs dienen die Luftauslassventile 34, 36 dazu, bei sinkender Flughöhe des Flugzeugs für einen Druckausgleich zwischen der Flugzeugumgebung und einem Flugzeugbereich zu sorgen, der ab einer gewissen Flughöhe des Flugzeugs unter einem gegenüber dem Umgebungsdruck erhöhten Druck gehalten wird. Die Luftströmung aus der Flugzeugkabine 12 in Richtung des zweiten Luftauslassventils 36 erfolgt durch Luftauslassöffnungen 44, die in einem die Flugzeugkabine 12 vom Unterflurbereich des Flugzeuges trennenden Boden 46 ausgebildet sind. Das erste Luftauslassventil 34 ist in einem vorderen Bereich des Flugzeugrumpfs angeordnet, während sich das zweite Luftauslassventil 36 in einem hinteren Rumpfbereich des Flugzeugs befindet. Mit anderen Worten, das zweite Luftauslassventil 36 ist entlang einer Längsachse des Flugzeugs weiter von einer Nase des Flugzeugs entfernt als das erste Luftauslassventil 34.

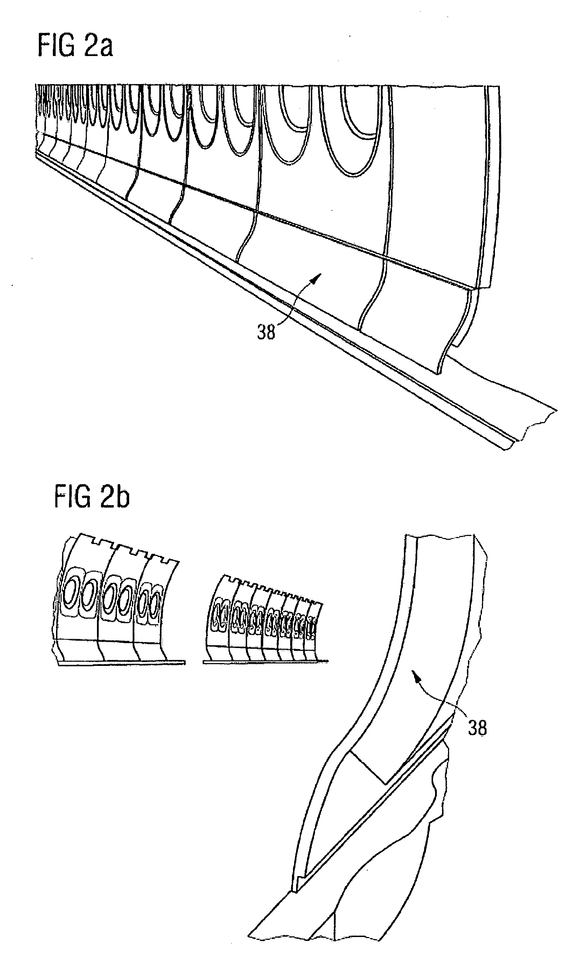

Schließlich umfasst das Notbelüftungssystem 10 eine in Figur 1 lediglich schematisch angedeutete Mehrzahl von Notluftklappen 38, die in einer geschlossenen Stellung einen Luftaustausch zwischen einem zu dem Luftmischer 24 benachbarten Flugzeugbereich 40 und der Flugzeugkabine 12 verhindern. Wie aus den Figuren 2a und 2b ersichtlich wird, werden die Notluftklappen 38 durch Dado-Paneele der Flugzeugkabinenverkleidung gebildet. Die Dado-Paneele sind zwischen ihrer geschlossenen Stellung, in der sie einen Luftaustausch zwischen dem zu dem Mischer 24 benachbarten Flugzeugbereich 40 im Unterflurbereich des Flugzeugs und der Flugzeugkabine 12 verhindern, und einer geöffneten Stellung bewegbar. In ihrer geöffneten Stellung ermöglichen die Dado-Paneele die Zufuhr von Luft aus dem zu dem Mischer 24 benachbarten Flugzeugbereich 40 in die Flugzeugkabine 12. Der Betrieb der Notluftklappe 38 wird ebenso wie der Betrieb der Notstaulufteinlassklappe 32 von der elektronischen Steuereinheit 14 gesteuert. Ferner dient die elektronische Steuereinheit 14 zur Steuerung des Betriebs der Klimaaggregate 20, 22, der Rezirkulationsventilatoren 26, 28 und der Luftauslassventile 34, 36.

Im Folgenden wird der Betrieb des Notbelüftungssystems 10 erläutert. In einem Fehlerfall, bei dem im Bereich des Mischers 24 der Flugzeugklimaanlage 16, beispielsweise durch ein abgetrenntes Rotorteil oder dergleichen, ein Leck erzeugt wird, entweicht Luft aus dem Mischer 24 in den zu dem Mischer 24 benachbarten Flugzeugbereich 40. Infolgedessen kommt es zu einem Druckabfall im Mischer 24, so dass nicht länger ausreichend Luft aus dem Mischer 24 in die Flugzeugkabine 12 gedrückt werden kann. Durch den Druckabfall im Mischer 24 steigt der Luftmassenstrom aus den Klimaaggregaten 20, 22 aufgrund des wegfallenden Mischergegendrucks kurzzeitig rapide an. Daraufhin wird der Luftmassenstrom aus den Klimaaggregaten 20, 22 verringert, wodurch der Mischerdruck weiter abfällt. Ferner bewirkt der Druckabfall im Mischer 24, dass die Rezirkulationsventilatoren 26, 28 Luft aus dem Mischer 24 statt aus der Flugzeugkabine 12 saugen. Folglich entsteht ein Kurzschluss im Rezirkulationsluftsystem der Flugzeugklimaanlage 16, der dazu führt, dass auch der Rezirkulationsluftstrom in den Mischer 24 zusammenbricht. Diese Entwicklung der Druckverhältnisse und der Luftmassenströme in den verschiedenen Bereichen der Flugzeugklimaanlage 16 wird von den Sensoren 18 erfasst. Folglich kann die elektronische Steuereinheit 14 auf der Grundlage der ihr von den Sensoren 18 übermittelten Signale das Vorliegen eines Lecks im Bereich des Luftmischers 24 der Flugzeugklimaanlage 16 erkennen.

In Reaktion auf die Erkennung eines Lecks im Bereich des Luftmischers 24 steuert die elektronische Steuereinheit 14 die Notluftklappen 38 in ihren geöffneten Zustand. Dadurch wird ermöglicht, dass aus dem Mischer 24 entweichende Luft aus dem zu dem Mischer 24 benachbarten Flugzeugbereich 40 in die Flugzeugkabine 12 strömen kann. Zur Förderung der Luft aus dem zu dem Mischer 24 benachbarten Flugzeugbereich 40 in die Flugzeugkabine 12 steuert die elektronische Steuereinheit 14 das zweite Luftauslassventil 36 in einen Öffnungszustand, in dem das in Form einer Klappe ausgebildete zweite Luftauslassventil 36 50 % geöffnet ist. Dadurch wird in einem zu dem zweiten Luftauslassventil 36 benachbarten Flugzeugbereich 42 ein Druck erzeugt, der geringer ist als der Druck in dem zu dem Luftmischer 24 benachbarten Flugzeugbereich 40.

Da der zu dem zweiten Luftauslassventil 36 benachbarte Flugzeugbereich 42, wie in Figur 1 schematisch angedeutet ist, von dem zu dem Mischer 24 der Klimaanlage 16 benachbarten Flugzeugbereich 40 getrennt ist, ermöglicht die oben beschriebene Drucksteuerung in dem zu dem zweiten Luftauslassventil 36 benachbarten Flugzeugbereich 42 eine unterdruckgetriebene Luftströmung aus dem zu dem Mischer 24 benachbarten Flugzeugbereich 40 in die Flugzeugkabine 12 und von der Flugzeugkabine 12 in den zu dem zweiten Luftauslassventil 36 benachbarten Flugzeugbereich 42. Die Luftströmung aus der Flugzeugkabine 12 in den zu dem zweitem Luftauslassventil 36 benachbarten Flugzeugbereich 42 erfolgt durch die in dem Boden 46 ausgebildeten Luftauslassöffnungen 44. Auf eine separate Einrichtung zur Förderung von Luft aus dem zu dem Mischer 24 benachbarten Flugzeugbereich 40 in die Flugzeugkabine 12 kann somit verzichtet werden.

Falls eines der Klimaaggregate 20, 22 der Klimaanlage 16 noch betriebsbereit ist, steuert die elektronische Steuereinheit 14 dieses Klimaaggregat 20, 22 derart, dass von dem Klimaaggregat 20, 22 ein maximaler Luftstrom erzeugt und dem Luftmischer 24 zugeführt wird. Falls beide Klimaaggregate 20, 22 noch betriebsbereit sind, werden beide Klimaaggregate 20, 22 von der elektronischen Steuereinheit 14 derart gesteuert, dass von den Klimaaggregaten 20, 22 ein maximaler Luftmassenstrom erzeugt und dem Luftmischer 24 zugeführt wird. Dadurch wird sichergestellt, dass im Mischer 24 und insbesondere in dem zu dem Mischer 24 benachbartem Flugzeugbereich 40 ausreichend Luft zur Zufuhr in die Flugzeugkabine 12 zur Verfügung steht.

Falls keines der Klimaaggregate 20, 22 mehr betriebsbereit ist, steuert die elektronische Steuereinheit 14 die Notstaulufteinlassklappe 32 in eine geöffnete Stellung. Dadurch kann durch den Notstaulufteinlass 30 Luft aus der Flugzeugumgebung in den Luftmischer 24 geleitet werden.

Schließlich steuert die elektronische Steuereinheit 14 die Rezirkulationsventilatoren 26, 28 derart, dass ihr Betrieb unterbrochen wird. Dadurch wird im Bereich des Mischers 24 ein der Zufuhr von Frischluft aus den Klimaaggregaten 20, 22 oder über den Notstaulufteinlass 30 in den Mischer 24 entgegenwirkender Druck verringert. Ferner wird verhindert, dass die Rezirkulationsventilatoren 26, 28 Luft aus dem Mischer 24 saugen.

## Patentansprüche

1. Verfahren zur Notbelüftung einer Flugzeugkabine (12), mit den Schritten:
- Erfassen eines Lecks im Bereich eines Luftmischers (24) einer Flugzeugklimaanlage (16), durch das Luft aus dem Luftmischer (24) in einen zu dem Luftmischer (24) benachbarten Flugzeugbereich (40) entweicht,
- Steuern einer Notluftklappe (38), die in einer geschlossenen Stellung einen Luftaustausch zwischen dem zu dem Luftmischer (24) benachbarten Flugzeugbereich (40) und der Flugzeugkabine (12) verhindert, in eine geöffnete Stellung, und
- Fördern von Luft aus dem zu dem Luftmischer (24) benachbarten Flugzeugbereich (40) durch die geöffnete Notluftklappe (38) in die Flugzeugkabine (12).

2. Verfahren nach Anspruch 1,
**dadurch gekennzeichnet, dass** ein Luftauslassventil (36) eines Flugzeugkabinendruckregelsystems derart in eine geöffnete Stellung gesteuert wird, dass in einem zu dem Luftauslassventil (36) benachbarten Bereich (42) des Flugzeugs ein Druck erzeugt wird, der geringer ist als der Druck in dem zu dem Luftmischer (24) benachbarten Flugzeugbereich (40).

3. Verfahren nach Anspruch 1 oder 2,
**dadurch gekennzeichnet, dass** ein Klimaaggregat (20, 22) der Flugzeugklimaanlage (16) derart gesteuert wird, dass von dem Klimaaggregat (20, 22) ein maximaler Luftmassenstrom erzeugt und dem Luftmischer (24) zugeführt wird.

4. Verfahren nach einem der Ansprüche 1 bis 3,
**dadurch gekennzeichnet, dass** eine Notstaulufteinlassklappe (32) in eine geöffnete Stellung gesteuert wird, so dass dem Luftmischer (24) durch einen Notstaulufteinlass (30) Flugzeugumgebungsluft zuführbar ist.

5. Verfahren nach einem der Ansprüche 1 bis 4,
**dadurch gekennzeichnet, dass** Rezirkulationsventilatoren (26, 28) der Flugzeugklimaanlage (16) derart gesteuert werden, dass ihr Betrieb unterbrochen wird.

6. Verfahren nach einem der Ansprüche 1 bis 5,
**dadurch gekennzeichnet, dass** die Notluftklappe (38) in einem Kabinenverkleidungspaneel angeordnet oder durch ein Kabinenverkleidungspaneel gebildet ist.

7. System (10) zur Notbelüftung einer Flugzeugkabine (12), mit:
- einer elektronischen Steuereinheit (14), die dazu eingerichtet ist, ein Leck im Bereich eines Luftmischers (24) einer Flugzeugklimaanlage (16) zu erfassen, durch das Luft aus dem Luftmischer (24) in einen zu dem Luftmischer (24) benachbarten Flugzeugbereich (40) entweicht, und eine Notluftklappe (38), die in einer geschlossenen Stellung einen Luftaustausch zwischen dem zu dem Luftmischer (24) benachbarten Flugzeugbereich (40) und der Flugzeugkabine (12) verhindert, in eine geöffnete Stellung zu steuern, und
- einer Einrichtung zur Förderung von Luft aus dem zu dem Luftmischer (24) benachbarten Flugzeugbereich (40) durch die geöffnete Notluftklappe (38) in die Flugzeugkabine (12).

8. System nach Anspruch 7,
**dadurch gekennzeichnet, dass** die Einrichtung zur Förderung von Luft aus dem zu dem Luftmischer (24) benachbarten Flugzeugbereich (40) in die Flugzeugkabine (12) ein Luftauslassventil (36) eines Flugzeugkabinendruckregelsystems umfasst, das dazu eingerichtet ist, derart in eine geöffnete Stellung gesteuert zu werden, dass in einem zu dem Luftauslassventil (36) benachbarten Bereich (42) des Flugzeugs ein Druck erzeugt wird, der geringer ist als der Druck in dem zu dem Luftmischer (24) benachbarten Flugzeugbereich (40).

9. System nach Anspruch 7 oder 8,
**gekennzeichnet durch** eine elektronische Steuereinheit (14), die dazu eingerichtet ist, ein Klimaaggregat (20, 22) der Flugzeugklimaanlage (16) derart zu steuern, dass von dem Klimaaggregat (20, 22) ein maximaler Luftmassenstrom erzeugt und dem Luftmischer (24) zugeführt wird.

10. System nach einem der Ansprüche 7 bis 9,
**gekennzeichnet durch** eine elektronische Steuereinheit (14), die dazu eingerichtet ist, eine Notstaulufteinlassklappe (32) in eine geöffnete Stellung zu steuern, so dass dem Luftmischer (24) **durch** einen Notstaulufteinlass (30) Flugzeugumgebungsluft zuführbar ist.

11. System nach einem der Ansprüche 7 bis 10,
**gekennzeichnet durch** eine elektronische Steuereinheit (14), die dazu eingerichtet ist, Rezirkulationsventilatoren (26, 28) der Flugzeugklimaanlage (16) derart zu steuern, dass ihr Betrieb unterbrochen wird.

12. System nach einem der Ansprüche 7 bis 11,
**dadurch gekennzeichnet, dass** die Notluftklappe (38) in einem Kabinenverkleidungspaneel angeordnet oder durch ein Kabinenverkleidungspaneel gebildet ist.

## Claims

1. Method for emergency ventilation of an aircraft cabin (12), comprising the steps:
- detecting a leak in the area of an air mixer (24) of an aircraft air conditioning system (16),
- controlling an emergency air flap (38), which in a closed position prevents an air exchange between an aircraft area (40) adjacent to the air mixer (24) and the aircraft cabin (12), into an open position, and
- conveying air from the aircraft area (40) adjacent to the air mixer (24) through the open emergency air flap (38) into the aircraft cabin (12).

2. Method according to claim 1,
**characterized in that** an air outlet valve (36) of an aircraft cabin pressure control system is controlled into an open position in such a way as to generate in an area (42) of the aircraft adjacent to the air outlet valve (36) a pressure that is lower than the pressure in the aircraft area (40) adjacent to the air mixer (24).

3. Method according to claim 1 or 2,
**characterized in that** an air conditioning unit (20, 22) of the aircraft air conditioning system (16) is controlled in such a way that a maximum air-mass flow is generated by the air conditioning unit (20, 22) and supplied to the air mixer (24).

4. Method according to one of claims 1 to 3,
**characterized in that** an emergency ram-air inlet flap (32) is controlled into an open position so that aircraft ambient air is supplyable through an emergency ram-air inlet (30) to the air mixer (24).

5. Method according to one of claims 1 to 4,
**characterized in that** recirculation fans (26, 28) of the aircraft air conditioning system (16) are controlled in such a way that their operation is interrupted.

6. Method according to one of claims 1 to 5,
**characterized in that** the emergency air flap (38) is disposed in a cabin trim panel or formed by a cabin trim panel.

7. System (10) for emergency ventilation of an aircraft cabin (12), comprising:
- an electronic control unit (14), which is adapted to detect a leak in the area of an air mixer (24) of an aircraft air conditioning system (16) and to control an emergency air flap (38), which in a closed position prevents an air exchange between an aircraft area (40) adjacent to the air mixer (24) and the aircraft cabin (12), into an open position, and
- a device for conveying air from the aircraft area (40) adjacent to the air mixer (24) through the open emergency air flap (38) into the aircraft cabin (12).

8. System according to claim 7,
**characterized in that** the device for conveying air from the aircraft area (40) adjacent to the air mixer (24) into the aircraft cabin (12) comprises an air outlet valve (36) of an aircraft cabin pressure control system that is adapted to be controlled into an open position in such a way as to generate in an area (42) of the aircraft adjacent to the air outlet valve (36) a pressure that is lower than the pressure in the aircraft area (40) adjacent to the air mixer (24).

9. System according to claim 7 or 8,
**characterized by** an electronic control unit (14), which is adapted to control an air conditioning unit (20, 22) of the aircraft air conditioning system (16) in such a way that a maximum air-mass flow is generated by the air conditioning unit (20, 22) and supplied to the air mixer (24).

10. System according to one of claims 7 to 9,
**characterized by** an electronic control unit (14), which is adapted to control an emergency ram-air inlet flap (38) into an open position so that aircraft ambient air is supplyable through an emergency ram-air inlet (30) to the air mixer (24).

11. System according to one of claims 7 to 10,
**characterized by** an electronic control unit (14), which is adapted to control recirculation fans (26, 28) of the aircraft air conditioning system (16) in such a way that their operation is interrupted.

12. System according to one of claims 7 to 11,
**characterized in that** the emergency air flap (38) is disposed in a cabin trim panel or formed by a cabin trim panel.

## Revendications

1. Procédé de ventilation d'urgence d'une cabine d'avion (12), comprenant les étapes suivantes :
- détection d'une fuite dans la zone d'un mélangeur d'air (24) d'une installation de climatisation d'avion (16), par laquelle de l'air s'échappe du mélangeur d'air (24) dans une zone d'avion (40) voisine du mélangeur d'air (24),
- commande vers une position ouverte d'un volet d'aération de secours (38) qui, dans une position fermée, empêche un échange d'air entre la zone d'avion (40) voisine du mélangeur d'air (24) et la cabine d'avion (12), et
- refoulement d'air de la zone d'avion (40) voisine du mélangeur d'air (24) vers la cabine d'avion (12) à travers le volet d'aération de secours (38) ouvert.

2. Procédé selon la revendication 1,
**caractérisé en ce qu'**une soupape d'évacuation d'air (36) d'un système de régulation de pression de cabine d'avion est commandée dans une position ouverte de manière à générer une pression dans une zone (42) de l'avion voisine de la soupape d'évacuation d'air (36) qui est inférieure à la pression dans la zone d'avion (40) voisine du mélangeur d'air (24).

3. Procédé selon la revendication 1 ou la revendication 2,
**caractérisé en ce qu'**un groupe de climatisation (20, 22) de l'installation de climatisation (16) de l'avion est commandé de manière à ce que un débit massique d'air maximal soit génère par le groupe de climatisation (20, 22) et envoyé au mélangeur d'air (24).

4. Procédé selon l'une des revendications 1 à 3,
**caractérisé en ce qu'**un volet d'entrée d'air dynamique de secours (32) est commandé dans une position ouverte de manière à pouvoir alimenter en air environnant de l'avion le mélangeur d'air (24), à travers une entrée d'air dynamique de secours (30).

5. Procédé selon l'une des revendications 1 à 4,
**caractérisé en ce que** des ventilateurs de recirculation (16, 28) de l'installation de climatisation (16) de l'avion sont commandés de manière à interrompre leur fonctionnement.

6. Procédé selon l'une des revendications 1 à 5,
**caractérisé en ce que** le volet d'aération de secours (38) est agencé dans un panneau de garniture de la cabine ou est formé par un panneau de garniture de la cabine.

7. Système (10) pour la ventilation d'urgence d'une cabine d'avion (12), comprenant :
- une unité de commande électronique (14) qui est adaptée pour détecter une fuite dans la zone d'un mélangeur d'air (24) d'une installation de climatisation d'avion (16), par laquelle de l'air s'échappe du mélangeur d'air (24) dans une zone d'avion (40) voisine du mélangeur d'air (24), et pour commander un volet d'aération de secours (38) vers une position ouverte, qui, dans une position fermée, empêche un échange d'air entre la zone d'avion (40) voisine du mélangeur d'air (24) et la cabine d'avion (12), et
- un organe de refoulement d'air de la zone d'avion (40) voisine du mélangeur d'air (24) à travers le volet d'aération de secours (38) ouvert vers la cabine d'avion (12).

8. Système selon la revendication 7,
**caractérisé en ce que** l'organe de refoulement d'air de la zone d'avion (40) voisine du mélangeur d'air (24) vers la cabine d'avion (12) comprend une soupape d'évacuation d'air (36) d'un système de régulation de pression de cabine d'avion, qui est adaptée pour être commandé dans une position ouverte, de manière à produire, dans une zone (42) de l'avion voisine de la soupape d'évacuation d'air (36), une pression qui est inférieure à la pression dans la zone d'avion (40) voisine du mélangeur d'air (24).

9. Système selon la revendication 7 ou la revendication 8,
**caractérisé par** une unité de commande électronique (14) qui est adaptée pour commander un groupe de climatisation (20, 22) de l'installation de climatisation (16) de l'avion, de manière à ce que un débit massique d'air maximal soit généré par le groupe de climatisation (20, 22) et envoyé au mélangeur d'air (24).

10. Système selon l'une des revendications 7 à 9,
**caractérisé par** une unité de commande électronique (14) qui est adaptée pour commander un volet d'entrée d'air dynamique de secours (32) dans une position ouverte, de manière à pouvoir alimenter en air environnant de l'avion le mélangeur d'air (24), à travers une entrée d'air dynamique de secours (30).

11. Système selon l'une des revendications 7 à 10,
**caractérisé par** une unité de commande électronique (14) qui est adaptée pour commander des ventilateurs de recirculation (16, 28) de l'installation de climatisation (16) de l'avion de manière à interrompre leur fonctionnement.

12. Système selon l'une des revendications 7 à 11,
**caractérisé en ce que** le volet d'aération de secours (38) est agencé dans un panneau de garniture de la cabine ou est formé par un panneau de garniture de la cabine.
